**Europäisches Patentamt**

(19) **European Patent Office**

**Office européen des brevets**

(11) Publication number : **0 162 021**
**B1**

(12) **EUROPEAN PATENT SPECIFICATION**

(45) Date of publication of patent specification :
**19.08.87**

(21) Application number : **85830091.6**

(22) Date of filing : **15.04.85**

(51) Int. Cl.⁴ : **B 60 K 17/34**

(54) Transmission system for motor vehicles.

(30) Priority : **16.04.84 IT 6738584**

(43) Date of publication of application :
**21.11.85 Bulletin 85/47**

(45) Publication of the grant of the patent :
**19.08.87 Bulletin 87/34**

(84) Designated contracting states :
**DE FR GB**

(56) References cited :
**DE-A- 1 480 696**
**DE-A- 2 747 786**
**DE-A- 2 933 267**
**FR-A- 2 288 009**
**GB-A- 878 075**
**GB-A- 1 102 407**
**GB-A- 1 156 762**
**PATENTS ABSTRACTS OF JAPAN, vol. 7, no. 230,**
**12th October 1983, page 42M249**

(73) Proprietor : **FIAT AUTO S.p.A.**
**Corso Giovanni Agnelli 200**
**I-10135 Torino (IT)**

(72) Inventor : **Messori, Pier Paolo**
**Via Roma 5/1**
**I-10025 Pino Torinese (Torino) (iT)**
Inventor : **Lombardi, Claudio**
**Via S. Marino 120**
**I-10137 Torino (IT)**
Inventor : **Bertino, Giuseppe**
**Via Borgosesia 48**
**I-10145 Torino (IT)**

(74) Representative : **Notaro, Giancarlo et al**
**c/o Jacobacci-Casetta & Perani S.p.A. Via Alfieri, 17**
**I-10121 Torino (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to motor vehicle transmission systems of the type comprising :

a gearbox including an input shaft and a driven shaft carrying a number of meshed pairs of gears, one gear of each pair being permanently connected for rotation with one of the two shafts and the other being connectible for rotation with the other shaft by synchronising means, and means for transmitting torque from the gearbox to the front and rear wheels of the motor vehicle, these means including :

a front differential for distributing torque between the front wheels of the motor vehicle, a rear differential for distributing torque between the rear wheels of the motor vehicle, and an intermediate differential for taking torque from the driven shaft of the gearbox and distributing it between the front differential and the rear differential.

Such a transmission system is generally known.

The object of present invention is to provide a transmission system of the type specified above, which enables an optimum distribution of torque between the various wheels of the motor vehicle as a function of the loads acting thereon and of the road-holding conditions.

The main characteristic of the invention lies in the fact that a speed variator device is interposed between the intermediate differential and the front differential.

In a first embodiment, the speed variator device comprises two parallel and spaced-apart shafts connected to the front differential and the intermediate differential respectively, and at least two meshed pairs of gears, one gear of each pair being permanently connected for rotation with one of the shafts, and the other being connectible for rotation with the other shaft by synchronising means.

In a second embodiment, the speed variator device comprises two parallel and spaced-apart shafts connected to the front differential and the intermediate differential respectively, and an automatic speed variator of the expansible pulley and belt type connecting these shafts.

By virtue of this characteristic, the intermediate differential and the front differential of the motor vehicle can be connected in accordance with various transmission ratios, enabling torque to be distributed between the front axle and the rear axle of the motor vehicle in the optimum manner as a function of the load and road-holding conditions.

Further characteristics and advantages of the present invention will be apparent from the description which follows with reference to the appended drawings, supplied purely by way of non-limiting example, in which :

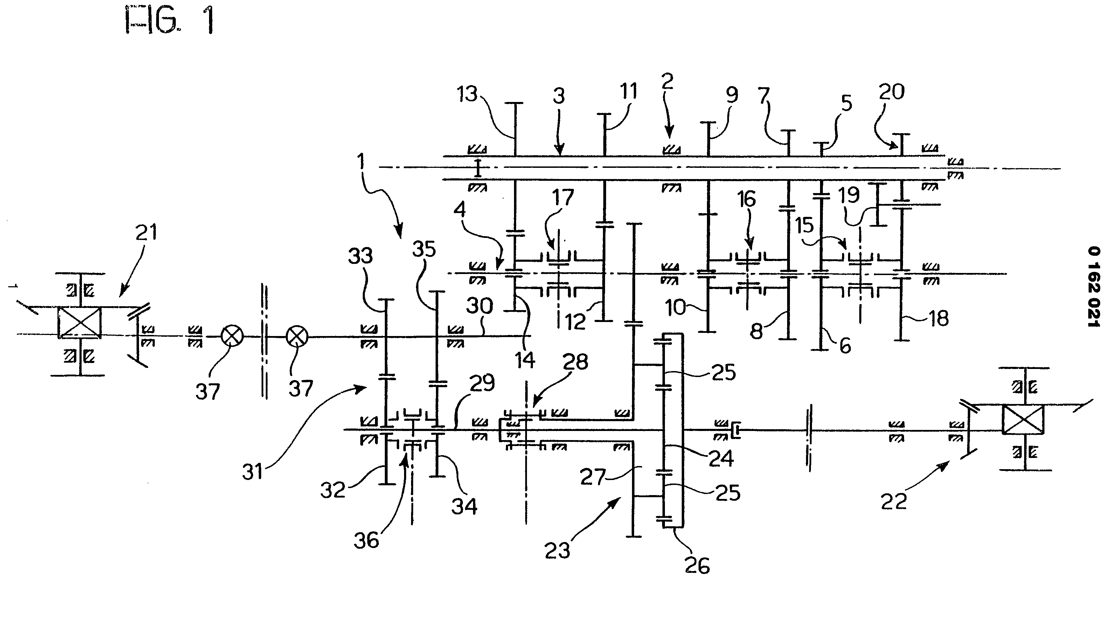

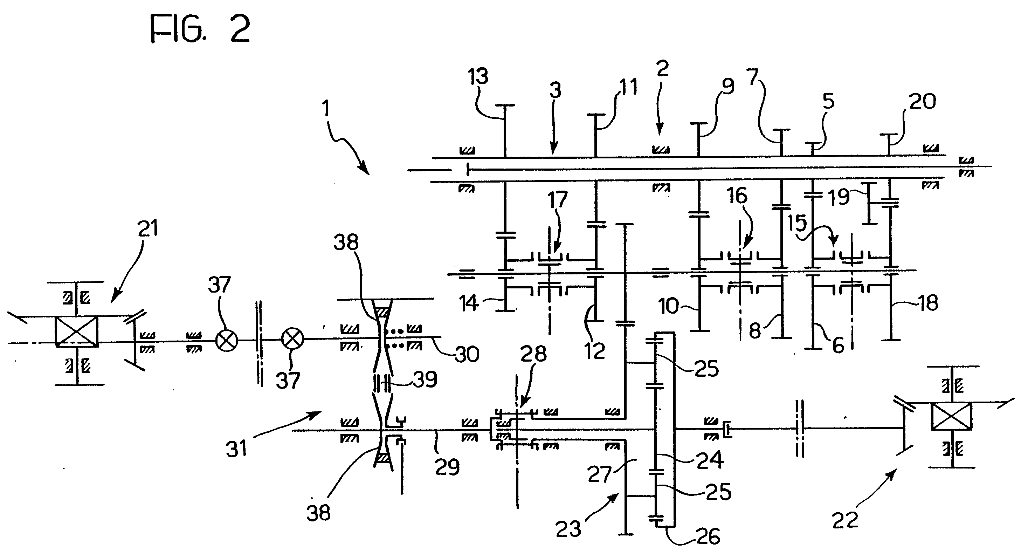

Figures 1 and 2 show diagrammatically two different embodiments of the transmission system according to the invention.

With reference to Figure 1, there is shown a transmission system 1 for four-wheel drive motor vehicles. The transmission system 1 includes a gearbox 2 having a main shaft 3 connectible to the engine of the motor vehicle by means of a conventional clutch, and a driven shaft 4. The shafts 3, 4 of the gearbox 2 carry a number of pairs of gears 5, 6 ; 7, 8 ; 9, 10 ; 11, 12 ; 13, 14. The gears 5, 7, 9, 11, 13 are permanently connected for rotation with the main shaft 3, while the gears 6, 8, 10, 12, 14 can be selectively connected for rotation with the driven shaft 4 by means of synchronising clutches 15, 16, 17. These pairs of gears correspond respectively to the first, second, third, fourth and fifth speed ratios obtainable through the gearbox. The synchroizing device 15 also controls the intervention of gears 18, 19 and 20 when reverse gear is selected.

Transmission system 1 comprises a front differential 21 of known type for distributing torque between the front wheels of the motor vehicle, and a rear differential 22, also of known type, for distributing torque between the rear wheels.

The two differentials 21, 22 are connected to an intermediate differential 23 for distributing torque between the front differential and the rear differential. The intermediate differential 23 is formed by an epicyclic train consisting of a sun wheel 24, a number of planets wheels 25, and an annulus 26.

In the example shown, the annulus 26 is connected to the rear differential 22, while the cage of the epicyclic train (indicated 27) is connected to a shaft 29 by means of a known type of releasable connection device 28 (shown only in diagrammatic form in Figure 1). The axis of the shaft 29 is parallel to and spaced from the axis of a shaft 30 connected to the front differential 21.

According to the invention, the shafts 29, 30 are connected together by means of a speed variator device 31 which, in the example shown in Figure 1, comprises two pairs of gears 32, 33 and 34, 35 capable of producing two different ratios of torque transmission from the shaft 29 to the shaft 30. The gears 33, 35 are permanently connected for rotation with the shaft 30, while the gears 32, 34 can be selectively connected for rotation with the shaft 29 by means of a synchronising clutch 36. In the example shown, the shaft 30 is also connected to the front differential 21 by means of a pair of constant-velocity universal joints 37.

In Figure 2 the parts common to Figure 1 are given the same reference numeral.

The embodiment shown in Figure 2 differs from that of Figure 1 in that the speed variator device 31 is constituted by an automatic belt-type speed variator of known type, comprising a pair of expansible pulleys 38 connected by a belt 39.

## Claims

1. Transmission system for motor vehicles, comprising : a gearbox (2) including an input shaft (3) and a driven shaft (4) carrying a number of meshed pairs of gears (5, 6 ; 7, 8 ; 9, 10 ; 11, 12 ; 13, 14), one gear of each pair being permanently connected for rotation with one of the shafts and the other being connectible for rotation with the other shaft by synchronising means (15, 16, 17), means for transmitting torque from the gearbox (2) to the front wheels and rear wheels of the motor vehicle, these means including : a front differential (21) for distributing torque between the front wheels of the motor vehicle, a rear differential (22) for distributing torque between the rear wheels of the motor vehicle, and an intermediate differential (23) for taking up the torque from the driven shaft (4) of the gearbox (2) and distributing it between the front differential (21) and the rear differential (22), characterised in that a speed variator device (31) is interposed between the intermediate differential (23) and the front differential (21).

2. Transmission system according to Claim 1, characterised in that the speed variator device (31) comprises two parallel and spaced-apart shafts (29, 30) connected to the intermediate differential (23) and the front differential (21) respectively, and at least two meshed pairs of gears (32, 33 ; 34, 35), one gear of each pair being permanently connected for rotation with one of the two shafts and the other being connectible for rotation with the other shaft by synchronising means.

3. Transmission system according to Claim 1, characterised in that the speed variator device (31) comprises two parallel and spaced-apart shafts (29, 30) connected to the intermediate differential (23) and the front differential (21) respectively, and an automatic speed variator of the expansible pulley and belt type connecting these shafts.

4. Transmission system according to any of Claims 1 and 3, characterised in that the intermediate differential (23) comprises an epicyclic train the cage (27) of which is driven by the driven shaft (4) of the gearbox (2).

5. Transmission system according to Claim 4 characterised in that the intermediate differential (23) is provided with a releasable coupling device (28) for connecting it to the front differential (21).

**Patentansprüche**

1. Kraftübertragungssystem für Kraftfahrzeuge : mit einem Schaltgetriebe (2) mit einer Eingangswelle (3) und einer angetriebenen Welle (4), die eine Anzahl von miteinander kämmenden Zahnradpaaren (5, 6 ; 7, 8 ; 9, 10 ; 11, 12 ; 13, 24) trägt, wobei ein Zahnrad jedes Paares ständig drehfest mit einer der Wellen verbunden ist und das andere durch Synchronisiermittel (15, 16, 17) mit der anderen Welle drehfest verbindbar ist, sowie mit Mitteln zur Drehmomentübertragung von dem Schaltgetriebe (2) zu den Vorderrädern und den Hinterrädern des Kraftfahrzeugs, wobei diese Mittel folgende Teile umfassen : ein Frontdifferential (21) zur Drehmomentverteilung zwischen den Vorderrädern des Kraftfahrzeugs, ein hinteres Differential (22) zur Drehmomentverteilung zwischen den Hinterrädern des Kraftfahrzeugs, sowie ein Zwischendifferential (23) zur Drehmomentaufnahme von der angetriebenen Welle (4) des Schaltgetriebes (2) und zur Verteilung des Drehmoments zwischen dem Frontdifferential (21) und dem hinteren Differential (22) dadurch gekennzeichnet, daß zwischen dem Zwischendifferential (23) und dem Frontdifferential (21) eine Vorrichtung (31) zur Geschwindigkeitswandlung eingefügt ist.

2. Kraftübertragungssystem nach Anspruch 1, dadurch gekennzeichnet, daß die Vorrichtung (31) zur Geschwindigkeitswandlung zwei parallele und ihm Abstand voneinander angeordnete Wellen (29, 30), die mit dem Zwischendifferential (23) bzw. dem Frontdifferential (21) verbunden sind, sowie wenigstens zwei miteinander kämmende Zahnradpaare (32, 33 ; 34, 35) umfaßt, wobei ein Zahnrad jedes dieser Paare ständig drehfest mit einer der beiden Wellen verbunden ist und das andere über Synchronisiermittel drehfest mit der anderen Welle verbindbar ist.

3. Kraftübertragungssystem nach Anspruch 1, dadurch gekennzeichnet, daß die Vorrichtung (31) zur Geschwindigkeitswandlung zwei parallele und ihm Abstand voneinander angeordnete Wellen (29, 30), die mit dem Zwischendifferential (23) bzw. dem Frontdifferential (21) verbunden sind, sowie einen diese Wellen miteinander verbindenden Geschwindigkeitswandler mit expandierbaren Riemenscheiben und Treibriemen umfaßt.

4. Kraftübertragungssystem nach einem der Ansprüche 1 und 3, dadurch gekennzeichnet, daß das Zwischendifferential (23) ein Planetengetriebe enthält, dessen Käfig (27) von der angetriebenen Welle (4) des Schaltgetriebes (2) angetrieben ist.

5. Kraftübertragungssystem nach Anspruch 4, dadurch gekennzeichnet, daß das Zwischendifferential (23) mit einer lösbaren Kupplungsvorrichtung (28) zu seiner Verbindung mit dem Frontdifferential (21) ausgestattet ist.

**Revendications**

1. Dispositif de transmission pour véhicules automobiles, comprenant : une boîte de vitesses (2) comprenant un arbre d'entrée (3) et un arbre entraîné (4) qui portent un certain nombre·de paires de pignons (5, 6 ; 7, 8 ; 9, 10 ; 11, 12 ; 13, 14) en prise, un pignon de chaque paire étant en permanence solidaire en rotation de l'un des arbres et l'autre pouvant être rendu solidaire de l'autre arbre en rotation par des moyens de synchronisation (15, 16, 17), des moyens destinés à transmettre un couple de la boîte de vitesses (2) aux roues avant et aux roues arrière du véhicule automobile, ces moyens comprenant : un différentiel avant (21) destiné à répartir le couple entre les roues avant du véhicule automobile, un différentiel arrière (22) destiné à répartir le couple entre les roues arrière du véhicule automobile, et un différentiel intermédiaire (23) destiné à recevoir le couple de l'arbre entraîné (4) de la boîte de vitesses (2) et à le répartir entre le différentiel avant (21) et le différentiel arrière (22), caractérisé en ce qu'un dispositif variateur de vitesse (31) est interposé entre le différentiel intermédiaire (23) et le différentiel avant (21).

2. Dispositif de transmission selon la revendication 1, caractérisé en ce que le dispositif variateur de vitesse (31) comprend deux arbres parallèles et espacés (29, 30), accouplés respectivement au différentiel intermédiaire (23) et au différentiel avant (21), et au moins deux paires de pignons en prise (32, 33 ; 34, 35), un pignon de chaque paire étant en permanence solidaire en rotation de l'un des deux arbres et l'autre pouvant être rendu solidaire de l'autre arbre en rotation par des moyens de synchronisation.

3. Dispositif de transmission selon la revendication 1, caractérisé en ce que le dispositif variateur de vitesse (31) comprend deux arbres parallèles et espacés (29, 30), accouplés respectivement au différentiel intermédiaire (23) et au différentiel avant (21), et un dispositif variateur de vitesse automatique, du type à poulies expansibles et à courroie, qui accouple ces deux arbres.

4. Dispositif de transmission selon l'une quelconque des revendications 1 et 3, caractérisé en ce que le différentiel intermédiaire (23) comprend un train épicycloïdal dont la cage (27) est entraînée par l'arbre entraîné (4) de la boîte de vitesses (2).

5. Dispositif de transmission selon la revendication 4, caractérisé en ce que le différentiel intermédiaire (23) est muni d'un dispositif d'accouplement débrayable (28) permettant de l'accoupler au différentiel avant (21).

FIG. 1

FIG. 2